# EUROPEAN PATENT APPLICATION

(11) **EP 4 180 387 A1**
(43) Date of publication of application: **17.05.2023**
(21) Application number: 21837059.1
(22) Date of filing: 02.07.2021
(51) Int. Cl.: C01B 17/26, C01B 17/28, H01B 1/06, H01B 1/10, H01B 13/00, H01M 10/052, H01M 10/0562

(54) **METHOD FOR PRODUCING LITHIUM SULFIDE**

(30) Priority: 09.07.2020 JP 2020118591
(71) Applicant: Mitsui Mining & Smelting Co., Ltd., Shinagawa-ku Tokyo 141-8584 (JP)
(72) Inventor: INAMURA, Masaaki, Ageo-shi, Saitama 362-0021 (JP); ITO, Takahiro, Ageo-shi, Saitama 362-0021 (JP); MIYASHITA, Norihiko, Ageo-shi, Saitama 362-0021 (JP)
(74) Representative: Novagraaf Technologies
(86) International application number: PCT/JP2021/025208
(87) International publication number: WO 2022/009810

(57) **Abstract**

It is an object of the present invention to provide a method that can produce lithium sulfide with high purity. The method for producing lithium sulfide according to the present invention includes: a first step of reducing a raw material containing lithium (Li) and sulfur (S) elements, using a reductant containing a carbon (C) element, thereby obtaining an intermediate; and a second step of reducing the intermediate using a reducing gas, thereby obtaining lithium sulfide. It is preferable that the first step is performed in an inert gas atmosphere. It is also preferable that the first step is performed at a temperature of from 700°C to 850°C. It is also preferable that the second step is performed at a temperature of from 830°C to 930°C.

## Description

### Technical Field

The present invention relates to a method for producing lithium sulfide.

### Background Art

As a method for producing lithium sulfide, for example, a method of reducing lithium sulfate is known. For example, Patent Literature 1 describes a method including: an atomization step of processing a powder containing lithium sulfate into fine particles with a specific particle diameter; and a reduction step of reducing the fine particles using carbon black to obtain lithium sulfide.

Patent Literature 2 describes a method including: a step of producing lithium sulfide through reduction of lithium sulfate by bringing a mixture containing lithium sulfate and black lead powder into contact with a carbon compact while heating; and a step of separating the produced lithium sulfide from the carbon compact. In the step of producing lithium sulfide, both the carbon material and the carbon compact are simultaneously used as reductants for lithium sulfate.

### Citation List

### Patent Literatures

Patent Literature 1: JP 2013-227180A
Patent Literature 2: JP 2015-74567A

### Summary of Invention

Examples of the reductant that can be used to produce lithium sulfide include the carbon materials described in Patent Literatures 1 and 2. Furthermore, a reducing gas may also be used as a reductant.

Incidentally, in order to produce lithium sulfide, it is required to obtain lithium sulfide with higher purity. Examples of the method for obtaining lithium sulfide with high purity include a method in which a large amount of reductant is used to sufficiently reduce lithium sulfate. However, when a large amount of carbon material is used as a reductant, lithium carbonate is by-produced as an impurity, as a result of which lithium sulfide with high purity cannot be obtained. Furthermore, when a large amount of reducing gas is used as a reductant, reaction heat is generated, resulting in melting of lithium sulfate and a significant decrease in specific surface area. This inhibits contact between lithium sulfate and a reducing gas, resulting in a decrease in the reactivity.

Accordingly, it is an object of the present invention to provide a method that can produce lithium sulfide with high purity.

The present inventors conducted an in-depth study in order to address the above-described problems, and found that, if a carbon-containing substance and a reducing gas are used in combination as a reductant, lithium sulfide with high purity can be produced.

The present invention is based on the above-mentioned findings, and provides a method for producing lithium sulfide, comprising:
a first step of reducing a raw material containing lithium (Li) and
sulfur (S) elements, using a reductant containing a carbon (C) element, thereby obtaining an intermediate; and
a second step of reducing the intermediate using a reducing gas, thereby obtaining lithium sulfide.

Furthermore, the present invention provides a method for producing lithium sulfide, including a step of reducing a raw material containing lithium (Li) and sulfur (S) elements, using a reductant containing a carbon (C) element and a reducing gas, thereby obtaining lithium sulfide.

Furthermore, the present invention provides a method for producing a solid electrolyte, comprising:
a step A of obtaining lithium sulfide;
a step B of mixing the lithium sulfide with phosphorus pentasulfide and lithium halide, thereby obtaining a raw material composition; and
a step C of firing the raw material composition,
in which the step A includes a first step of reducing a raw material containing lithium (Li) and sulfur (S) elements, using a reductant containing a carbon (C) element, thereby obtaining an intermediate, and a second step of reducing the intermediate using a reducing gas, thereby obtaining lithium sulfide.

### Description of Embodiment

The present invention will be described below based on its preferred embodiment. The present invention relates to a method for producing lithium sulfide (Li₂S). In the present invention, a raw material containing lithium (Li) and sulfur (S) elements is used as a raw material for producing lithium sulfide. This raw material is reduced to obtain an intermediate (this step is also referred to as a "first step" hereinafter), and then the intermediate is reduced to obtain target lithium sulfide (this step is also referred to as a "second step" hereinafter). Hereinafter, these steps will be described in detail.

A compound containing lithium (Li) and sulfur (S) elements is a preferable example of the raw material can be used in the first step. Examples of the compound include lithium sulfate (Li₂SO₄), lithium sulfite (Li₂SO₃), and lithium thiosulfate (Li₂S₂O₃). These compounds can be used alone or in a combination of two or more. From the viewpoint of industrial availability and ease of handling, it is preferable to use lithium sulfate as the raw material. Lithium sulfate is typically supplied to the first step in a solid state, such as in powder or granular form. Lithium sulfate is typically a hydrous salt, and, in the present invention, the hydrous salt of lithium sulfate may be used as it is, or the hydrous salt of lithium sulfate may be dehydrated and used as an anhydrous salt.

In the first step, the above-described raw material is reduced using a reductant to obtain an intermediate of target lithium sulfide. The reductant used in this step preferably contains a carbon (C) element because it is easy to obtain lithium sulfate with high purity. The "reductant containing a carbon (C) element" refers to a substance that has reducing power to reduce the above-mentioned raw material and contains a carbon (C) element as a constituent element.

As long as the reductant containing a carbon (C) element is a substance that is typically used as a carbon-based reductant, there is no particular limitation on the reductant, and it may be gaseous, liquid, or solid. The reductant may be any reductant that can be a carbon supply source and may contain non-carbon atoms. Examples of the reductant include organic compounds such as monohydric alcohol, polyhydric alcohol, and reducing sugar (e.g., glucose). Examples thereof further include solid carbonaceous materials such as coal, coke, black lead, carbon black, fullerene, carbon tube, charcoal, carbide, and elemental carbon and its allotropes. Typical examples of the elemental carbon and its allotropes include graphite. In the present invention, it is preferable to use charcoal and carbon blacks such as vegetable charcoal, bamboo charcoal, and activated carbon, and more preferable to use activated carbon, from the viewpoint of reducing capacity. The activated carbon may be powdered activated carbon or granular activated carbon. As the reductant containing a carbon element, the above-described materials can be used alone or in a combination of two or more.

There is no particular limitation on the shape of the reductant containing a carbon element, and it may be, for example, fibrous, granular, or powdered. The average particle diameter of the granular reductant may be, for example, 1000 µm or less, 300 µm or less, or 150 µm or less. Meanwhile, the average particle diameter of the reductant may be, for example, 0.1 µm or more, 1 µm or more, or 10 µm or more. The smaller the average particle diameter of the reductant, the more efficiently the reduction reaction progresses because the contact area when the reductant is mixed with the raw material increases. The average particle diameter refers to the volume cumulative particle diameter D₅₀ at 50% cumulative volume as measured using a laser diffraction scattering particle size distribution method.

The first step is preferably a step of mixing a raw material and a reductant and reducing the raw material using the reductant. When the reductant is solid, the reaction between the reductant and the raw material described above is a solid phase reaction, and thus they are preferably subjected to the reduction reaction in a state where they are well mixed with each other, so that the raw material can be reduced efficiently.

As a mixer used for mixing, for example, a mixer may be used in which a vessel filled with the raw material and the reductant that are to be mixed moves to perform mixing. Alternatively, a mixer may be used in which a rotating body in the shape of a plate, a screw, a ribbon, a cylinder, a disk, or any other shape installed in a vessel filled with the raw material and the reductant rotates to perform mixing. Alternatively, a mixer may be used in which milling media such as balls or beads made of ceramic, glass, metal, resin, or other material are placed together with the raw material and the reductant in a vessel filled with the raw material and the reductant, and force is applied to the media, so that the media move to perform mixing.

As a dispersant that can be used in mixing in order to bring the raw material and the reductant into a dispersed state, a gas such as air may be used (a so-called dry method). Alternatively, a liquid such as water or an organic solvent may be used (a so-called wet method). Alternatively, the raw material and the reductant may be mixed under vacuum.

When using a liquid as a dispersant, a liquid that does not dissolve the raw material may be used, or a liquid that dissolves the raw material may be used. Furthermore, when using a liquid as a dispersant, drying may be performed after mixing to remove the liquid.

The first step is preferably a step of performing reduction after milling at least one of the raw material and the reductant. The phrase "mill at least one of the raw material and the reductant" means that only the raw material may be milled or only the reductant may be milled. In particular, it is preferable that both the raw material and the reductant are milled. The reason for this is that the contact area between the raw material and the reductant can be made larger, and thus the raw material can be reduced more efficiently. When milling both the raw material and the reductant, the raw material and the reductant may be milled separately, or a mixture of the raw material and the reductant may be milled. The latter is especially preferred because it is economically advantageous due to the simplified step, and moreover, it enables more efficient reduction.

Wet milling or dry milling is a method for milling at least one of the raw material and the reductant. There is no particular limitation on the dispersant that can be used in wet milling, and, for example, it is preferably water. The use of water as a dispersant is economically preferable.

When the raw material is water soluble, for example, if the raw material and the reductant are mixed and subjected to wet milling, a suspension is obtained in which the reductant is suspended in a solution of the raw material in which at least part of the raw material is dissolved.

When wet milling is performed, it is preferable to dry the suspension of the dispersant to remove the dispersant as necessary. For example, when the raw material and the reductant are mixed and subjected to wet milling, if the mixture is dried after wet milling, the raw material is precipitated on the surface of the reductant, and a mixture is obtained in which the raw material adheres to the reductant so as to cover the reductant. This results in a closer contact between the raw material and the reductant than when the raw material and the reductant powder are simply mixed together, which is an even more favorable condition for solid-phase reactions. When both the mixing step and the milling step are performed according to the wet method, it is economically preferable to perform both steps according to the wet method successively or simultaneously, followed by a drying step, because the drying step can be performed in a single step only.

In the first step, the reduction reaction may be caused to occur without or with heating, depending on the type of raw material and reductant. When causing the reduction reaction to occur with heating, from the viewpoint of ensuring an efficient reduction reaction, the temperature conditions are in such a manner that the temperature in the system is preferably set to from 700°C to 850°C, more preferably from 720°C to 830°C, and even more preferably from 750°C to 800°C. In this case, from the viewpoint of ensuring an efficient reduction reaction, the heating time is preferably set to 0.5 to 6 hours, and more preferably 1 to 3 hours.

The atmosphere for the reduction reaction may be a reducing atmosphere or a non-reducing atmosphere. In the present invention, from the viewpoint of obtaining lithium sulfide with higher purity, it is preferable to perform the first step in a non-reducing atmosphere.

Examples of the reducing atmosphere include a hydrogen gas atmosphere and a hydrogen gas atmosphere diluted with an inert gas. Meanwhile, examples of the non-reducing atmosphere include inert gas atmospheres such as a nitrogen gas atmosphere and an argon gas atmosphere. When a reducing atmosphere is used as the atmosphere for the reduction reaction, the first step and a later-described second step can be performed simultaneously, but the second step may be performed separately after the first step. When the first step and the second step are performed simultaneously, the concentration of the reducing gas, the reaction temperature of the raw material and the gas, the reaction time, and the like are preferably adjusted as appropriate in such a manner that the reductant containing a carbon (C) element does not remain after the reaction in the first step.

In the first step, the amount of reductant used is preferably determined in relation to the amount of raw material used described above. Specifically, the amount of reductant is preferably not greater than an amount in which the reductant is consumed substantially without excess or deficiency in the reaction in which all the raw material is reduced to lithium sulfide (hereinafter referred to as a "substantial equivalent"). For example, if the raw material is lithium sulfate and the reductant is elemental carbon (e.g., activated carbon), the reduction reaction of lithium sulfate can be expressed by Formula (1) below.

Li₂SO₄+2C→Li₂S+2CO₂ (1)

In Formula (1), 2 moles of elemental carbon is necessary to reduce 1 mole of lithium sulfate and produce 1 mole of lithium sulfide (Li₂S), that is, one equivalent for the reduction is 2 moles. In other words, when contrasting elemental carbon that is a raw material and an oxygen (O) element in carbon dioxide that is a product, it can be said that 2 moles of oxygen (O) element is consumed for 1 mole of carbon (C) element. Hereinafter, for the sake of convenience, the ratio of the amount of reductant used to the amount of a certain amount of raw material is expressed as C1 mole/O2 moles (hereinafter referred to as "C/O2") that is an equivalent ratio expressed by Formula (1). The "substantial equivalent" mentioned above is not equivalent to "C/O2 = 1" for reasons as described below. In actual reduction reactions, when elemental carbon is used as the reductant, the reaction product of reduction is not limited to carbon dioxide, and carbon monoxide may be produced as shown in Formula (2) below depending on conditions.

Li₂SO₄+4C→Li₂S+4CO (2)

Carbon monoxide produced as shown in Formula (2) may be discharged out of the reaction system as it is, or may be used for reduction reaction as shown in Formula (3).

Li₂SO₄+4CO→Li₂S+4CO₂ (3)

Successive occurrence of Formulas (2) and (3) can be considered as meaning that the reaction in Formula (1) has occurred. In fact, the present inventors believe that the reactions of Formulas (1), (2), and (3) occur simultaneously. Furthermore, since at least part of the produced carbon monoxide is discharged out of the reaction system without being consumed by the reduction reaction, even if the amounts of raw material and reductant are adjusted in such a manner that C/O2 is equal to 1, the amount of reductant in that case is smaller than the substantial equivalent. The preferred range of C/O2 that is not greater than the substantial equivalent is from 0.8 to 1.3, preferably from 0.9 to 1.2, and more preferably from 1.0 to 1.1.

Setting the amount of reductant used to the above-mentioned amount is advantageous in terms of the following aspects. That is to say, when converting the raw material to the target lithium sulfide through reduction reactions, it is advantageous to use the reductant in an amount greater than or equal to the substantial equivalent in order to convert a larger amount of raw material to lithium sulfide. However, when the reductant in an amount greater than or equal to the substantial equivalent is used, although all the raw material is reduced, unreacted reductant remains in the product, and a large amount of lithium carbonate is produced as a byproduct. The presence of residual reductant and lithium carbonate in the product is one of the factors that impair the lithium ion conductivity of the solid sulfide electrolyte produced from lithium sulfide. Furthermore, it is very difficult to exactly adjust the ratio of the amounts of raw material and reductant to the substantial equivalent, but even if the ratio can be exactly adjusted to the substantial equivalent, the byproduction of lithium carbonate cannot be avoided. When using a reductant containing carbon to reduce the raw material, it is extremely difficult to produce only lithium sulfide without byproduction of lithium carbonate. Therefore, in the present invention, the ratio of the amount of reductant to the amount of raw material is set so as to be not greater than the substantial equivalent, to prevent excessive byproduction of lithium carbonate. Although the excessive byproduction of lithium carbonate can be suppressed by setting the amount of reductant so as to be not greater than the substantial equivalent, there is a risk that unreacted (i.e., unreduced) raw material may remain in the reaction system. Therefore, in the present invention, in a later-described second step, the raw material remaining in the reaction system is reduced and lithium carbonate (if present in the reaction system) is decomposed to obtain lithium sulfide with high purity. This decomposition reaction of lithium carbonate can be expressed by Formula (4) below.

Li₂CO₃+H₂→Li₂O+CO+H₂O (4)

From the viewpoint of reducing the amount of impurities contained in lithium sulfide that is the target product of this production method to the fullest extent possible, when the intensity of a peak observed at 2θ=25.6°±0.5° is taken as I_{A} and the intensity of a peak observed at 2θ=27.1°±0.5° is taken as I_{B} in an X-ray diffraction pattern obtained by measuring, using an X-ray diffractometer, the substance that is present in the system when the first step is completed, that is, the intermediate product obtained in the first step, the ratio of the I_{A} to the I_{B} (I_{A}/I_{B}) is preferably 0.10 or less. In addition to this, when the intensity of a peak observed at 2θ=21.2°±0.5° is taken as Ic in the X-ray diffraction pattern, the ratio of the Ic to the I_{B} (I_{C}/I_{B}) is preferably from 0.03 to 0.09. From the viewpoint of further reducing the amount of impurities in lithium sulfide, the I_{A}/I_{B} value is more preferably 0.05 or less. The I_{A}/I_{B} value is most preferably zero. Meanwhile, the I_{C}/I_{B} value is more preferably from 0.03 to 0.08.

The peak observed at 2θ=25.6°±0.5° is attributed to lithium sulfate. The peak observed at 2θ=27.1°±0.5° is attributed to lithium sulfide. The peak observed at 2θ=21.2°±0.5° is attributed to lithium carbonate. That is to say, the first step is preferably performed in such a manner that the remaining amount of lithium sulfate used as one of the raw materials is as small as possible and in such a manner that the amount of lithium carbonate produced as a byproduct is within a predetermined range.

The first step is preferably performed by placing the raw material and the reductant in a vessel that is inert to the reduction reaction. Examples of the vessel include an alumina saggar.

The reduction reaction in the first step yields an intermediate. This intermediate is typically a mixture containing unreacted raw material, target lithium sulfide, and byproducts. The byproducts vary depending on the type of raw material. If the raw material is, for example, lithium sulfate, the byproduct is typically lithium carbonate described above.

After the first step is completed, the substance present in the reaction system (the intermediate mentioned above) is subjected to the second step. If necessary, an additional step may be performed between the first and second steps. Examples of the additional step include a step of milling the intermediate obtained in the first step. Since the reaction that occurs in the second step is a gas-solid reaction between the solid intermediate and the reducing gas, the addition of the milling step facilitates contact between the intermediate and the reducing gas, allowing the reaction to progress efficiently.

In the second step, the substance present in the reaction system after the first step is completed is reduced using a reducing gas. Examples of the reducing gas include hydrogen gas and hydrogen gas diluted with an inert gas. The second step is preferably performed in the absence of the reductant used in the first step. That is to say, it is preferable that, when the second step is performed, the reductant used in the first step is not present in the reaction system.

The pressure of the reducing gas in the reaction system may be atmospheric, or may be below or above atmospheric pressure. Typically, satisfactory results are obtained by circulating the reducing gas in the reaction system under atmospheric pressure.

In the second step, the reduction reaction may be caused to occur without or with heating, depending on the type of reducing gas. When causing the reduction reaction to occur with heating, from the viewpoint of ensuring an efficient reduction reaction, the temperature conditions are in such a manner that the temperature in the system is preferably set to from 830°C to 930°C, more preferably from 830°C to 900°C, and even more preferably from 830°C to 870°C. In this case, from the viewpoint of ensuring an efficient reduction reaction, the heating time is preferably set to 1 to 12 hours, more preferably 2 to 8 hours, and even more preferably 3 to 6 hours.

The second step may be performed simultaneously with the first step or after the first step. In the second step, the substance present in the reaction system after the first step is completed, that is, the intermediate obtained in the first step is reduced to further produce lithium sulfide. Specifically, in the second step, lithium sulfate that is an unreacted raw material contained in the intermediate is reduced to lithium sulfide, and lithium carbonate that is a byproduct is decomposed to lithium oxide. As a result, the amount of impurities contained in the final product after the second step is completed is further reduced.

A method to obtain lithium sulfide by performing the second step that reduces the raw material using a reducing gas, without performing the first step is also conceivable. However, in this case, reaction heat is generated by the reduction, and thus the temperature in the reaction system increases and possibly exceeds the melting point of the raw material, which may cause melting of the raw material. Melting of the raw material leads to a significant decrease in the specific surface area, which further leads to a decrease in the reactivity. Accordingly, it is not easy to reduce the raw material only by using a reducing gas.

In this manner, in contrast to conventional techniques that could not successfully produce lithium sulfide by using a reducing gas alone and a carbon-based reductant alone, the present invention properly combines these substances and for the first time makes it easy to produce lithium sulfide with high purity. In the present invention, a carbon-based reductant is used in the first step and a reducing gas is used in the second step, and the present inventors have confirmed that the desired effect cannot be obtained by using these substances in the opposite order, that is, using the reducing gas in the first step and the carbon-based reductant in the second step.

In the second step, from the viewpoint of further increasing the purity of lithium sulfide that is a target product, the above-mentioned ratio of the Ic to the I_{B} (I_{C}/I_{B}) is preferably 0.02 or less, in an X-ray diffraction pattern obtained by measuring, using an X-ray diffractometer, the substance that is present in the system when the second step is completed, that is, lithium sulfide that is a final product. In addition to this, when the intensity of a peak observed at 2θ=33.6°±0.5° is taken as I_{D} in the X-ray diffraction pattern, the ratio of the I_{D} to the I_{B} (I_{D}/I_{B}) is preferably 0.05 or less. From the viewpoint of further reducing the amount of impurities in lithium sulfide, the I_{C}/I_{B} value is more preferably 0.01 or less. The I_{C}/I_{B} value is most preferably zero. Meanwhile, the I_{D}/I_{B} value is more preferably 0.03 or less. The I_{D}/I_{B} value is most preferably zero. The peak observed at 2θ=33.6°±0.5° is attributed to lithium oxide.

The second step is preferably performed by placing the intermediate obtained in the first step in a vessel that is inert to the reducing gas. Examples of the vessel include an alumina saggar.

Through the above-described steps, target lithium sulfide is obtained. This lithium sulfide is of high purity with low impurity content. The main impurity is lithium oxide (Li₂O). The lithium oxide is produced through the reduction of lithium carbonate in the second step. From the viewpoint of further improving the purity of lithium sulfide, the lithium sulfide obtained after the second step is completed can be subjected to a third step. In the third step, lithium oxide contained in lithium sulfide obtained in the second step is converted to lithium sulfide. For this purpose, the lithium sulfide obtained in the second step is preferably heated in a sulfur-containing gas atmosphere. This causes lithium oxide that is an impurity contained in lithium sulfide to be sulfurized to produce lithium sulfide.

Examples of the sulfur-containing gas that can be used in the third step include hydrogen sulfide (H₂S) gas and sulfur (S) gas. These gases can be used alone or in a combination of two or more. These gases may be used as they are or used in a state of being diluted with a noble gas. The pressure of the sulfur-containing gas in the reaction system may be atmospheric, or may be below or above atmospheric pressure. Typically, sulfurization can be successfully performed by circulating the sulfur-containing gas in the reaction system in atmospheric pressure.

In the third step, from the viewpoint of ensuring efficient sulfurization of lithium oxide, the temperature in the system is preferably set to from 200°C to 1000°C, more preferably from 300°C to 900°C, and even more preferably from 400°C to 800°C. In this case, from the viewpoint of ensuring an efficient sulfurization reaction, the heating time is preferably set to 15 minutes to 6 hours, more preferably 30 minutes to 4 hours, and even more preferably 1 to 3 hours.

In the third step, from the viewpoint of further increasing the purity of lithium sulfide that is a target product, the third step is preferably performed in such a manner that the above-mentioned ratio of the Ic to the I_{B} (I_{C}/I_{B}) is 0.02 or less, in an X-ray diffraction pattern obtained by measuring, using an X-ray diffractometer, the substance present in the system when the third step is completed. In addition to this, the second step is preferably performed in such a manner that, when the intensity of a peak observed at 2θ=33.6°±0.5° is taken as I_{D} in the X-ray diffraction pattern, the ratio of the I_{D} to the I_{B} (I_{D}/I_{B}) is 0.05 or less. From the viewpoint of further reducing the amount of impurities in lithium sulfide, the I_{C}/I_{B} value is more preferably 0.01 or less. The I_{C}/I_{B} value is most preferably zero. Meanwhile, the I_{D}/I_{B} value is preferably 0.03 or less, more preferably 0.02 or less, and even more preferably 0.01 or less. The I_{D}/I_{B} value is most preferably zero.

In the description above, the first and second steps were chronologically performed separately, but alternatively, the first and second steps can be performed simultaneously. Specifically, lithium sulfide can also be obtained by reducing a raw material containing lithium (Li) and sulfur (S) elements, using a reductant containing a carbon (C) element and a reducing gas. In this case, the types of raw material, reductant containing a carbon (C) element, and reducing gas are as described above. The pressure of the reducing gas is also as described above. Moreover, the ratio between the raw material and the reductant containing a carbon (C) element is also as described above.

From the viewpoint of ensuring an efficient reduction reaction of the raw material, the temperature in the system during reduction is preferably set to from 830°C to 870°C, and more preferably from 840°C to 860°C. In this case, from the viewpoint of ensuring an efficient reduction reaction, the heating time is preferably set to 1 to 12 hours, more preferably 2 to 8 hours, and even more preferably 3 to 6 hours.

The reduction under the above conditions can also yield the target lithium sulfide with high purity. However, comparing the purities of the obtained lithium sulfide, especially the amounts of lithium oxide that is impurities, it is better to perform the first and second steps described above separately than this step.

Once lithium sulfide is obtained through this step, the lithium sulfide may be subjected to the sulfidation step that is the third step, as described above. With the third step, even if lithium oxide is contained as impurities in the lithium sulfide, the purity of the lithium sulfide finally obtained can be improved by sulfurizing the lithium oxide.

The thus obtained lithium sulfide is suitably used as a raw material for solid electrolytes. Hereinafter, a method for producing a solid electrolyte of the present invention will be described. The method for producing a solid electrolyte of the present invention includes a step A of obtaining lithium sulfide, a step B of mixing the lithium sulfide with phosphorus pentasulfide and lithium halide, thereby obtaining a raw material composition, and a step C of firing the raw material composition. The step A includes a first step of reducing a raw material containing lithium (Li) and sulfur (S) elements, using a reductant containing a carbon (C) element, thereby obtaining an intermediate, and a second step of reducing the intermediate using a reducing gas, thereby obtaining lithium sulfide.

Hereinafter, these steps will be described, but the step A can be the same as the method for producing lithium sulfide described above, and thus a description thereof has been omitted.

The number of types of lithium halide for use in the step B may be one, or two or more. Examples of the lithium halide include lithium chloride (LiCl) and lithium bromide (LiBr). Examples of the mixing in the step B include mechanical milling. Examples of the mechanical milling include vibration milling, ball milling, turbo milling, mechanical fusion, and disk milling, among which ball milling is preferable. As long as a desired raw material composition can be obtained, there is no particular limitation on the condition for ball milling, but, for example, the rotational speed of the table plate is preferably 200 rpm or more, and more preferably 300 rpm or more, and is preferably 500 rpm or less, and more preferably 400 rpm or less. The treatment time of ball milling can be adjusted, for example, from 1 to 100 hours as appropriate.

The firing in the step C is preferably performed under conditions under which a desired solid electrolyte can be obtained. Specifically, the conditions are preferably in such a manner that a solid electrolyte containing a crystalline phase with an argyrodite-type crystal structure can be obtained. From this point of view, for example, the firing is preferably performed in a hydrogen sulfide gas atmosphere. The firing temperature is, for example, preferably 300°C or more, and more preferably 400°C or more, and is preferably 700°C or less, and more preferably 600°C or less. The firing time can be adjusted according to the firing temperature as appropriate, and is, for example, preferably from 1 to 10 hours, and more preferably from 2 to 6 hours.

The details of the solid electrolyte and its production method are described, for example, in the applicant's earlier application WO 2019/009228.

From the viewpoint of realizing good lithium ion conductivity, the solid electrolyte obtained in the present invention, so-called sulfide solid electrolyte is in such a manner that the ratio of the content of halogen (X) element to the content of phosphorus (P) element (content of halogen (X) element / content of phosphorus (P) element) is, in a molar ratio, preferably from 0.50 to 2.1, more preferably from 0.80 to 2.0, and even more preferably from 1.2 to 1.8.

When the solid electrolyte obtained in the present invention has a crystalline phase with an argyrodite-type crystal structure, the solid electrolyte is expressed by Compositional Formula: LiₐPS_{b}X_{c} (where, X is at least one type of halogen element, a is from 3.0 to 6.5, b is from 3.5 to 5.5, and c is from 0.50 to 3.0). Furthermore, the presence of a crystalline phase with an argyrodite-type crystal structure can be confirmed, for example, based on an X-ray diffraction pattern measured using CuKα1 rays. The details can be the same as those described in WO 2019/009228, and thus a description thereof has been omitted.

### Examples

Hereinafter, the present invention will be described more specifically by way of examples. However, the scope of the present invention is not limited to these examples. Unless otherwise stated, "%" means "mass%".

### Example 1

### First Step

An Li₂SO₄·H₂O powder was used as a raw material. An activated carbon powder was used as a solid reductant containing carbon. The amount of Li₂SO₄·H₂O used was 86.26 g, and the amount of activated carbon used was 13.74 g. Accordingly, the C/O2 proportion, which is a molar ratio of a carbon (C) element contained in the activated carbon to 2 moles of oxygen (O) element contained in sulfuric acid ions constituting the Li₂SO₄·H₂O, was 85%.

Two polyamide pots (volume 500 ml) were prepared, and 43.13 g of Li₂SO₄·H₂O and 6.87 g of activated carbon were placed in the pots. Then, 125 g of pure water and 600 g of ZrO₂ beads (diameter 5 mm) were placed in each pot and the lid of the pot was closed. The two pots were shaken for 5 hours using a paint shaker, and thus the powder mixture in the pots was milled and mixed. After milling and mixing, the mixture was separated into a slurry and beads using a sieve with a 1 mm aperture, and the slurry was then placed in a 1 L reaction vessel with an SUS jacket and heated to dryness with stirring. The obtained powder mixture was placed in a stainless steel vessel, this vessel was installed in a vacuum dryer, and Li₂SO₄·H₂O in the powder mixture was dehydrated at 200°C in a vacuum.

Then, 30.00 g of the powder mixture was filled into an alumina saggar having an inner capacity of 100 ml with inner dimensions of 40 mm long, 130 mm wide, and 24 mm deep, and the saggar was installed inside a core tube of a tube furnace. The temperature was increased to 800°C at a temperature increase rate of 300°C/hour while argon gas was circulated through the core tube, and the furnace was heated as is in an argon atmosphere for 2 hours. The furnace temperature was lowered to room temperature at a temperature decrease rate of 300°C/hour while argon gas was still circulated, and the intermediate was taken out of the furnace.

When part of the obtained intermediate was extracted, milled in an agate mortar, and measured using an X-ray diffractometer, the I_{A}/I_{B} and I_{C}/I_{B} values in the X-ray diffraction pattern were as shown in Table 1 below. A SmartLab manufactured by Rigaku Corporation was used as the powder X-ray diffractometer. CuKα1 rays were used as a radioactive source.

The taking the intermediate out of the furnace, the extracting part of the intermediate, the milling the intermediate, and the subjecting the intermediate to X-ray diffraction measurement using a powder X-ray diffractometer described above were all performed in an N₂ gas atmosphere without exposure to an atmospheric atmosphere.

### Second Step

The saggar still containing the remainder of the intermediate obtained in the first step was installed inside the core tube of the tube furnace. The temperature was increased to 850°C at a temperature increase rate of 300°C/hour while a gas mixture of hydrogen and nitrogen (hydrogen concentration 3.5 vol%) was circulated through the core tube, and the furnace was heated as is in a gas mixture atmosphere for 4 hours. The furnace temperature was lowered to room temperature at a temperature decrease rate of 300°C/hour while the gas mixture was still circulated, and target lithium sulfide was taken out of the furnace.

When part of the obtained lithium sulfide was extracted, milled in an agate mortar, and measured using an X-ray diffractometer, the I_{C}/I_{B} and I_{D}/I_{B} values in the X-ray diffraction pattern were as shown in Tables 1 and 2 below.

The taking the target product out of the furnace, the extracting part of the target product, the milling the target product, and the subjecting the target product to X-ray diffraction measurement using a powder X-ray diffractometer described above were all performed in an N₂ gas atmosphere without exposure to an atmospheric atmosphere.

### Example 2

The C/O2 proportion in the first step in Example 1, which is a molar ratio of a carbon (C) element contained in the activated carbon to 2 moles of oxygen (O) element contained in sulfuric acid ions constituting the Li₂SO₄·H₂O, was changed to 95%. Lithium sulfide was obtained in a similar way to that of Example 1, except for this aspect.

### Example 3

The C/O2 proportion in the first step in Example 1, which is a molar ratio of a carbon (C) element contained in the activated carbon to 2 moles of oxygen (O) element contained in sulfuric acid ions constituting the Li₂SO₄·H₂O, was changed to 105%. Lithium sulfide was obtained in a similar way to that of Example 1, except for this aspect.

### Example 4

The C/O2 proportion in the first step in Example 1, which is a molar ratio of a carbon (C) element contained in the activated carbon to 2 moles of oxygen (O) element contained in sulfuric acid ions constituting the Li₂SO₄·H₂O, was changed to 125%. Lithium sulfide was obtained in a similar way to that of Example 1, except for this aspect.

### Example 5

The C/O2 proportion in the first step in Example 1, which is a molar ratio of a carbon (C) element contained in the activated carbon to 2 moles of oxygen (O) element contained in sulfuric acid ions constituting the Li₂SO₄·H₂O, was changed to 125%. Furthermore, the heating temperature in the first step was changed to 700°C. Lithium sulfide was obtained in a similar way to that of Example 1, except for these aspects.

### Example 6

The C/O2 proportion in the first step in Example 1, which is a molar ratio of a carbon (C) element contained in the activated carbon to 2 moles of oxygen (O) element contained in sulfuric acid ions constituting the Li₂SO₄·H₂O, was changed to 125%. Furthermore, the heating temperature in the second step was changed to 900°C. Lithium sulfide was obtained in a similar way to that of Example 1, except for these aspects.

### Example 7

This example is an example in which the third step was performed after the second step was completed.

The C/O2 proportion in the first step in Example 1, which is a molar ratio of a carbon (C) element contained in the activated carbon to 2 moles of oxygen (O) element contained in sulfuric acid ions constituting the Li₂SO₄·H₂O, was changed to 125%. Furthermore, the third step was performed after the second step was completed. Lithium sulfide was obtained in a similar way to that of Example 1, except for this aspect.

In the third step, the saggar still containing the lithium sulfide obtained in the second step was installed inside a core tube of a tube furnace. The temperature was increased to 500°C at a temperature increase rate of 300°C/hour while hydrogen sulfide gas (concentration 100 vol%) was circulated through the core tube, and the furnace was heated as is in a hydrogen sulfide gas atmosphere for 1 hour. The furnace temperature was lowered to room temperature at a temperature decrease rate of 300°C/hour while hydrogen sulfide gas was still circulated, and target lithium sulfide was taken out of the furnace.

### Example 8

This example is an example in which the first step and the second step were performed simultaneously.

The C/O2 proportion, which is a molar ratio of a carbon (C) element contained in the activated carbon to 2 moles of oxygen (O) element contained in sulfuric acid ions constituting the Li₂SO₄·H₂O, was set to 105%.

Then, 30.00 g of the powder mixture was filled into an alumina saggar having an inner capacity of 100 ml with inner dimensions of 40 mm long, 130 mm wide, and 24 mm deep, and the saggar was installed inside a core tube of a tube furnace. The temperature was increased to 850°C at a temperature increase rate of 300°C/hour while a gas mixture of hydrogen and nitrogen (hydrogen concentration 3.5 vol%) was circulated through the core tube, and the furnace was heated as is in a gas mixture atmosphere for 4 hours. The furnace temperature was lowered to room temperature at a temperature decrease rate of 300°C/hour while the gas mixture was still circulated, and target lithium sulfide was taken out of the furnace.

The operations were the same as those of Example 1, except for these aspects.

### Comparative Example 1

This comparative example corresponds to Example of Patent Literature 1 (JP 2013-227180A).

An Li₂SO₄·H₂O powder was used as a raw material. An activated carbon powder was used as a solid reductant containing carbon. The amount of Li₂SO₄·H₂O used was 58.48 g, and the amount of activated carbon used was 11.52 g. Accordingly, the C/O2 proportion, which is a molar ratio of a carbon (C) element contained in the activated carbon to 2 moles of oxygen (O) element contained in sulfuric acid ions constituting the Li₂SO₄·H₂O, was 105%.

Two polyamide pots (volume 500 ml) were prepared, and 29.24 g of Li₂SO₄·H₂O and 5.76 g of activated carbon were placed in the pots. Then, 85 g of n-heptane and 600 g of ZrO₂ beads (diameter 5 mm) were placed in each pot and the lid of the pot was closed. The pots were shaken for 5 hours using a paint shaker, and thus the powder mixture in the pots was milled and mixed. After milling and mixing, the mixture was separated into a slurry and beads using a sieve with a 1 mm aperture, and the slurry was then dried using a dryer. The obtained powder mixture was placed in a stainless steel vessel, this vessel was installed in a vacuum dryer, and Li₂SO₄·H₂O in the powder mixture was dehydrated at 200°C in a vacuum.

Then, 30.00 g of the powder mixture was filled into an alumina saggar having an inner capacity of 100 ml with inner dimensions of 40 mm long, 130 mm wide, and 24 mm deep, and the saggar was installed inside a core tube of a tube furnace. The temperature was increased to 830°C at a temperature increase rate of 300°C/hour while argon gas was circulated through the core tube, and the furnace was heated as is in an argon atmosphere for 3 hours. The furnace temperature was lowered to room temperature at a temperature decrease rate of 300°C/hour while argon gas was still circulated, and the target product was taken out of the furnace.

When part of the obtained target product was extracted, milled in an agate mortar, and measured using an X-ray diffractometer, the I_{C}/I_{B} and I_{D}/I_{B} values in the X-ray diffraction pattern were as shown in Tables 1 and 2 below.

The taking the target product out of the furnace, the extracting part of the target product, the milling the target product, and the subjecting the target product to X-ray diffraction measurement using a powder X-ray diffractometer described above were all performed in an N₂ gas atmosphere without exposure to an atmospheric atmosphere.

### Comparative Example 2

The C/O2 proportion in Comparative Example 1, which is a molar ratio of a carbon (C) element contained in the activated carbon to 2 moles of oxygen (O) element contained in sulfuric acid ions constituting the Li₂SO₄·H₂O, was changed to 125%. The operations were the same as those of Comparative Example 1, except for this aspect.

### Comparative Example 3

This comparative example corresponds to Example of Patent Literature 2 (JP 2015-74567A).

An Li₂SO₄·H₂O powder was used as a raw material. An activated carbon powder was used as a solid reductant containing carbon. The amount of Li₂SO₄·H₂O used was 61.36 g, and the amount of activated carbon used was 8.64 g. Accordingly, the C/O2 proportion, which is a molar ratio of a carbon (C) element contained in the activated carbon to 2 moles of oxygen (O) element contained in sulfuric acid ions constituting the Li₂SO₄·H₂O, was 75%.

Two polyamide pots (volume 500 ml) were prepared, and 30.68 g of Li₂SO₄·H₂O and 4.32 g of activated carbon were placed in the pots. Then, 85 g of n-heptane and 600 g of ZrO₂ beads (diameter 5 mm) were placed in each pot and the lid of the pot was closed. The pots were shaken for 5 hours using a paint shaker, and thus the powder mixture in the pots was milled and mixed. After milling and mixing, the mixture was separated into a slurry and beads using a sieve with a 1 mm aperture, and the slurry was then dried using a dryer. The obtained powder mixture was placed in a stainless steel vessel, this vessel was installed in a vacuum dryer, and Li₂SO₄·H₂O in the powder mixture was dehydrated at 200°C in a vacuum.

Then, 30.00 g of the powder mixture was filled into a black lead saggar having an inner capacity of 100 ml with inner dimensions of 40 mm long, 130 mm wide, and 24 mm deep, and the saggar was installed inside a core tube of a tube furnace. The temperature was increased to 860°C at a temperature increase rate of 300°C/hour while argon gas was circulated through the core tube, and the furnace was heated as is in an argon atmosphere for 3 hours. The furnace temperature was lowered to room temperature at a temperature decrease rate of 300°C/hour while argon gas was still circulated, and the target product was taken out of the furnace.

When part of the obtained target product was extracted, milled in an agate mortar, and measured using an X-ray diffractometer, the I_{C}/I_{B} and I_{D}/I_{B} values in the X-ray diffraction pattern were as shown in Table 1 below.

The taking the target product out of the furnace, the extracting part of the target product, the milling the target product, and the subjecting the target product to X-ray diffraction measurement using a powder X-ray diffractometer described above were all performed in an N₂ gas atmosphere without exposure to an atmospheric atmosphere.

### Comparative Example 4

The C/O2 proportion in Comparative Example 3, which is a molar ratio of a carbon (C) element contained in the activated carbon to 2 moles of oxygen (O) element contained in sulfuric acid ions constituting the Li₂SO₄·H₂O, was changed to 85%. The operations were the same as those of Comparative Example 3, except for this aspect.

### Evaluation 1

The lithium sulfides obtained in the examples and the comparative examples were used as a raw material to produce solid sulfide electrolytes using the following method. The lithium ion conductivities of the obtained solid electrolytes were measured using the following method. Table 1 below shows the results.

### Production of Solid Sulfide Electrolyte

A lithium sulfide powder, a phosphorus pentasulfide powder, a lithium chloride powder, and a lithium bromide powder were weighed to have a total amount of 75 g in such a manner that the raw material composition was Li_{5.4}PS_{4.4}Cl_{0.4}Br_{1.2}, and mixed in a ball mill for 6 hours to prepare a powder mixture. This powder mixture was filled into a black lead saggar, and the saggar was installed inside a core tube of a tube furnace. The temperature was increased to 500°C at a temperature increase rate of 200°C/hour while hydrogen sulfide gas (concentration 100 vol%) was circulated through the core tube at 1.0 L/min, and the furnace was heated as is for 4 hours to obtain a solid sulfide electrolyte. These operations were all performed in a glovebox substituted with sufficiently dried argon gas (dew point -60°C or less).

### Measurement of Lithium Ion Conductivity

The sulfide solid electrolyte was uniaxially pressurized at a pressure of 200 MPa and then subjected to cold isostatic pressing (CIP) at a pressure of 200 MPa to produce a pellet with a diameter of 10 mm and a thickness of 2 to 5 mm. Carbon paste was applied as electrodes to the upper and lower faces of the pellet, and then heat-treatment was performed at 180°C for 30 minutes to prepare a sample for lithium ion conductivity measurement. The lithium ion conductivity was measured at 25°C using the AC impedance method. These operations were all performed in a glovebox substituted with sufficiently dried argon gas (dew point -60°C or less).

**Table 1**

| | Production conditions and X-ray diffraction results of intermediate | | | | | | | | | X-ray diffraction results of target (lithium sulfide) | | Lithium ion conductivity (mS/cm) of solid sulfide electrolyte |
|---|---|---|---|---|---|---|---|---|---|---|---|---|
| | Conditions of first step and X-ray diffraction results of intermediate | | | | Second step | | Third step | | Saggar | | | |
| | Reductant | Condition | I_{A}/I_{B} | I_{C}/I_{B} | Reducing gas | Condition | Gas | Condition | | I_{A}/I_{B} | I_{C}/I_{B} | |
| Ex. 1 | Activated carbon (C/O2=85%) | 800°C×2h | 0.05 | 0.08 | 3.5%H₂ | 850°C×4h | Not performed | Not performed | Alumina | 0 | 0.01 | 3.68 |
| Ex. 2 | Activated carbon (C/O2=95%) | 800°C×2h | 0.04 | 0.07 | 3.5%H₂ | 850°C×4h | Not performed | Not performed | Alumina | 0 | 0 | 3.71 |
| Ex. 3 | Activated carbon (C/O2=105%) | 800°C×2h | 0.03 | 0.06 | 3.5%H₂ | 850°C×4h | Not performed | Not performed | Alumina | 0 | 0 | 3.62 |
| Ex. 4 | Activated carbon (C/O2=125%) | 800°C×2h | 0.01 | 0.03 | 3.5%H₂ | 850°C×4h | Not performed | Not performed | Alumina | 0 | 0 | 3.80 |
| Ex. 5 | Activated carbon (C/O2=125%) | 700°C×2h | 0.10 | 0.09 | 3.5%H₂ | 850°C×4h | Not performed | Not performed | Alumina | 0 | 0.01 | 3.48 |
| Ex. 6 | Activated carbon (C/O2=125%) | 800°C×2h | 0.01 | 0.03 | 3.5%H₂ | 900°C×4h | Not performed | Not performed | Alumina | 0 | 0 | 3.30 |
| Ex. 7 | Activated carbon (C/O2=125%) | 800°C×2h | 0.01 | 0.03 | 3.5%H₂ | 850°C×4h | H₂S | 500°C×1h | Alumina | 0 | 0 | 3.53 |
| Ex. 8 | Activated carbon (C/O2=105%) 3.5%H₂ | 850°C×4h | Not performed | Not performed | Not performed | Not performed | Not performed | Not performed | Alumina | 0 | 0.02 | 2.85 |
| Com. Ex. 1 | Activated carbon (C/O2=105%) | 830°C×3h | Not performed | Not performed | Not performed | Not performed | Not performed | Not performed | Alumina | 0.04 | 0.05 | 0.49 |
| Com.Ex.2 | Activated carbon (C/O2=125%) | 830°C×3h | Not performed | Not performed | Not performed | Not performed | Not performed | Not performed | Alumina | 0.01 | 0.03 | 1.33 |
| Com.Ex.3 | Activated carbon (C/O2=75%) | 860°C×3h | Not performed | Not performed | Not performed | Not performed | Not performed | Not performed | Black lead | 0.04 | 0.07 | 0.02 |
| | Black lead saggar | | | | | | | | | | | |
| Com.Ex.4 | Activated carbon (C/O2=85%) | 860°C×3h | Not performed | Not performed | Not performed | Not performed | Not performed | Not performed | Black lead | 0 | 0.03 | 1.86 |
| | Black lead saggar | | | | | | | | | | | |

**Table 2**

| | Production conditions | | | | | | | X-ray diffraction results of target (lithium sulfide) | Lithium ion conductivity (mS/cm) of solid sulfide electrolyte |
|---|---|---|---|---|---|---|---|---|---|
| | Conditions of first step | | Second step | | Third step | | Saggar | | |
| | Reductant | Condition | Reducing gas | Condition | Gas | Condition | | I_{D}/I_{B} | |
| Ex. 1 | Activated carbon (C/O2=85%) | 800°C×2h | 3.5%H₂ | 850°C×4h | Not performed | Not performed | Alumina | 0.02 | 3.68 |
| Ex. 2 | Activated carbon (C/O2=95%) | 800°C×2h | 3.5%H₂ | 850°C×4h | Not performed | Not performed | Alumina | 0.02 | 3.71 |
| Ex. | Activated carbon | 800°C×2h | 3.5%H₂ | 850°C×4h | Not | Not | Alumina | 0.03 | 3.62 |
| 3 | (C/O2=105%) | | | | performed | performed | | | |
| Ex. 4 | Activated carbon (C/O2=125%) | 800°C×2h | 3.5%H₂ | 850°C×4h | Not performed | Not performed | Alumina | 0.03 | 3.80 |
| Ex. 5 | Activated carbon (C/O2=125%) | 700°C×2h | 3.5%H₂ | 850°C×4h | Not performed | Not performed | Alumina | 0.03 | 3.48 |
| Ex. 6 | Activated carbon (C/O2=125%) | 800°C×2h | 3.5%H₂ | 900°C×4h | Not performed | Not performed | Alumina | 0.02 | 3.30 |
| Ex. 7 | Activated carbon (C/O2=125%) | 800°C×2h | 3.5%H₂ | 850°C×4h | H₂S | 500°C×1h | Alumina | 0 | 3.53 |
| Ex. 8 | Activated carbon (C/O2=105%) 3.5%H₂ | 850°C×4h | Not performed | Not performed | Not performed | Not performed | Alumina | 0.01 | 2.85 |

As is clear from the results shown in Tables 1 and 2, the contents of lithium carbonate and lithium sulfate that are impurities in the lithium sulfides obtained in the examples are smaller than those in the lithium sulfides in the comparative examples. Accordingly, it is seen that the lithium ion conductivities of solid sulfide electrolytes using the lithium sulfides obtained in the examples as a raw material are higher than those of solid sulfide electrolytes using the lithium sulfides in the comparative examples as a raw material.

### Industrial Applicability

As described in detail above, the method of the present invention can produce lithium sulfide with high purity.

## Claims

1. A method for producing lithium sulfide, comprising:
a first step of reducing a raw material containing lithium (Li) and
sulfur (S) elements, using a reductant containing a carbon (C) element, thereby obtaining an intermediate; and
a second step of reducing the intermediate using a reducing gas,
thereby obtaining lithium sulfide.

2. The method for producing lithium sulfide according to claim 1, wherein the first step is performed in such a manner that a ratio of I_{A} to I_{B} (I_{A}/I_{B}) is 0.10 or less, and a ratio of Ic to I_{B} (I_{C}/I_{B}) is from 0.03 to 0.09, wherein
the I_{A} represents an intensity of a peak observed at 2θ=25.6°±0.5°in an X-ray diffraction pattern of the intermediate,
the I_{B} represents an intensity of a peak observed at 2θ=27.1°±0.5°in an X-ray diffraction pattern of the intermediate and
the Ic represents an intensity of a peak observed at 2θ=21.2°±0.5°in an X-ray diffraction pattern of the intermediate,
the X-ray diffraction pattern of the intermediate being measured using an X-ray diffractometer.

3. The method for producing lithium sulfide according to claim 1 or 2, wherein the second step is performed in such a manner that a ratio of Ic to I_{B} (I_{C}/I_{B}) is 0.02 or less, wherein
the I_{B} represents an intensity of a peak observed at 2θ=27.1°±0.5°in an X-ray diffraction pattern of the lithium sulfide, and
the Ic represents an intensity of a peak observed at 2θ=21.2°±0.5°in an X-ray diffraction pattern of the lithium sulfide,
the X-ray diffraction pattern of the lithium sulfide being measured using an X-ray diffractometer.

4. The method for producing lithium sulfide according to any one of claims 1 to 3, wherein the first step is performed in an inert gas atmosphere.

5. The method for producing lithium sulfide according to any one of claims 1 to 4, wherein the first step is performed at a temperature of from 700°C to 850°C.

6. The method for producing lithium sulfide according to any one of claims 1 to 5, wherein the second step is performed at a temperature of from 830°C to 930°C.

7. A method for producing lithium sulfide, comprising a step of reducing a raw material containing lithium (Li) and sulfur (S) elements, using a reductant containing a carbon (C) element and a reducing gas, thereby obtaining lithium sulfide.

8. The method for producing lithium sulfide according to claim 7, wherein the step is performed at a temperature of from 830°C to 870°C.

9. Lithium sulfide produced using the method according to any one of claims 1 to 8.

10. A method for producing a solid electrolyte, comprising:
a step A of obtaining lithium sulfide;
a step B of mixing the lithium sulfide with phosphorus pentasulfide and lithium halide, thereby obtaining a raw material composition;
and
a step C of firing the raw material composition,
wherein the step A includes a first step of reducing a raw material containing lithium (Li) and sulfur (S) elements, using a reductant containing a carbon (C) element, thereby obtaining an intermediate, and a second step of reducing the intermediate using a reducing gas, thereby obtaining lithium sulfide.

11. The method for producing a solid electrolyte according to claim 10, wherein the solid electrolyte contains a crystalline phase with an argyrodite-type crystal structure.
